(19) Europäisches Patentamt
European Patent Office
Office européen des brevets

(11) Numéro de publication : **0 286 471 B1**

(12) # FASCICULE DE BREVET EUROPEEN

(45) Date de publication du fascicule du brevet : **02.01.92 Bulletin 92/01**

(51) Int. Cl.$^5$ : **B64D 11/06**

(21) Numéro de dépôt : **88400588.5**

(22) Date de dépôt : **11.03.88**

(54) **Structure à dispositif d'absorption d'énergie et résistat à des efforts dynamiques formant piètement pour siège d'appareil de transport aérien et siège comportant une telle structure.**

(30) Priorité : **12.03.87 FR 8703422**

(43) Date de publication de la demande : **12.10.88 Bulletin 88/41**

(45) Mention de la délivrance du brevet : **02.01.92 Bulletin 92/01**

(84) Etats contractants désignés : **AT BE CH DE ES FR GB GR IT LI LU NL SE**

(56) Documents cités :
**EP-A- 0 053 012**
**DE-A- 3 533 132**
**FR-A- 2 004 769**
**US-A- 3 145 051**
**N.T.I.S. TECH. NOTES, juillet 1987, page 647, Springfield, VA, US; "Energy-absorbing passenger seat for aircraft"**

(73) Titulaire : **SOCIETE INDUSTRIELLE ET COMMERCIALE DE MATERIEL AERONAUTIQUE (SICMA) SOCIETE ANONYME**
**7, rue Lucien Coupet**
**F-36100 Issoudun (FR)**

(72) Inventeur : **Vallée, Bernard**
**91, rue du Colonel Fabien Eglantiers 1**
**F-92160 Antony (FR)**

(74) Mandataire : **Derambure, Christian**
**BUGNION ASSOCIES 55, rue Boissonade**
**F-75014 Paris (FR)**

EP 0 286 471 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne une structure formant piètement pour siège d'appareil de transport aérien, notamment pour siège de passager d'avion de ligne, qui comporte un dispositif d'absorption d'énergie et qui résiste à des efforts dynamiques. L'invention concerne aussi un siège comportant une telle structure.

Le problème général posé par les transports aériens est d'assurer la sécurité des personnes transportées, notamment des passagers. En particulier, on a cherché à améliorer les différents éléments pouvant permettre la survie des personnes transportées lorsqu'un accident tel qu'un écrasement de l'appareil au sol se produit.

On sait déjà que le piètement des sièges a une importance prépondérante sur la survie des personnes transportées, puisqu'il détermine le mode de déformation et de déplacement du siège en cas de choc.

La plupart des sièges connus pour passagers d'avions de ligne ont un piètement rigide, fixe et indéformable. Les normes de l'aviation civile (FAR) imposaient jusqu'alors à ces sièges de résister à des tests de charges statiques maximales (4.2 g vers le haut, 9 g vers l'avant, 3 g latéralement, 7.2 g vers le bas, 1.5 g vers l'arrière, g étant la valeur de l'accélération terrestre).

Cependant, il s'est avéré que ces normes ne sont pas suffisantes et ne reflètent pas la réalité. En effet, des tests effectués montrent que des sièges qui satisfont à ces normes présentent en pratique une résistance faible et mal répartie dans les conditions réelles d'un écrasement.

De ce fait, la FAA (Fédéral Aviation Administration) a proposé de faire subir aux sièges, en plus de tests statiques plus sévères, des tests dynamiques qui reflètent mieux la réalité d'un écrasement au sol. Cette proposition est décrite dans le document américain NPRM 86-11, publié dans : Federal Register/Vol. 51, N° 137/17 juillet 1986, pages 25982 à 25989. En particulier, la colonne de droite p 25988 de ce document précise les conditions des tests dynamiques au paragraphe 25562 (b).

Selon cette proposition, le siège doit pouvoir subir, positionné en biais de 10°, un choc longitudinal à une vitesse d'impact égale à 13,4 m/s et correspondant à une décélération de 16 g au bout de 0.09 s et, un choc vertical incliné à 30° à une vitesse d'impact égale à 10,7 m/s et correspondant à une décélération de 14 g au bout de 0,08 s.

Le brevet EP-A-0053012 et le brevet US-A-4375300 correspondant décrivent une structure pour siège d'avion dans laquelle le pied arrière est en forme de "L" inversé pour augmenter la place disponible pour les pieds des passagers. Mais une telle structure ne comporte pas de dispositif d'absorption d'énergie et n'est pas susceptible de subir les tests mentionnés ci-dessus avec succès. Au contraire, les conditions de résistance mentionnées dans ces brevets ne correspondent qu'aux valeurs d'efforts statiques cités ci-dessus. Les différents jambages sont fixés à l'ossature du siège et au sol sans articulation possible, ce qui empêche toute déformation globale du piètement.

Aucun des sièges actuellement connus ne peut résister à ces tests dynamiques, même lorsqu'ils sont équipés d'amortisseurs d'énergie, comme cela est suggéré par le brevet FR-A-2004769 ou par le document américain : DOT/FAA/CT-85/25 (Mark R. Cannon and Richard E. Zimmermann), "Seat Experiment Results, Full-Scale Transport Aircraft, controlled Impact Demonstration", US Department of Transportation, Federal Aviation Administration. De plus, ces sièges connus engendrent, lorsqu'ils se déforment sous l'effet d'un choc, une course de déplacement et une modification de l'assiette trop importantes, ce qui est dangereux pour les passagers.

On sait aussi qu'il est possible d'équiper les sièges de pilotes d'avion ou d'hélicoptères de dispositifs d'absorption d'énergie pour amortir les chocs dûs à un écrasement au sol. Cependant, ces sièges ainsi équipés ne peuvent pas être utilisés pour le transport aérien en commun car ils sont soit trop coûteux pour être banalisés, soit trop lourds, et surtout mal adaptés à une utilisation sur avions de ligne.

Le document US-A-3145051 décrit aussi une structure formant piètement pour siège d'avion comprenant un ancrage avant d'un pied avant vertical, un ancrage arrière d'un pied arrière vertical, les extrémités supérieures des pieds étant associées par des connexions à pivot à des pinces qui sont elles-mêmes fixées solidaires de l'ossature. Un dispositif d'absorption d'énergie est associé à l'ancrage avant et à la partie arrière de l'ossature du siège.

L'invention a donc pour but général de pallier aux inconvénients des sièges connus, et de réaliser une structure formant piètement et un siège comportant une telle structure, d'une part qui absorbent considérablement l'énergie du choc de l'écrasement au sol d'un appareil de transport aérien, et évitent au passager de subir des valeurs de décélération dangereuses ou mortelles, et simultanément et d'autre part, dont le mouvement, lors d'un écrasement de l'appareil au sol, n'engendre pas ou peu de modifications de l'assiette du siège, notamment n'engendre pas de rotation du siège tendant à éjecter brusquement le passager.

L'invention a en particulier pour objectif de réaliser une structure formant piètement et un siège comportant une telle structure qui satisfont les tests dynamiques proposés par la FAA et tels que décrits dans le document américain NPRM 86-11 mentionné ci-dessus, tout en étant adaptés à une utilisation à titre de siège de passagers dans un appareil de transport aérien en commun. Plus précisément, l'invention a pour objectifs de concevoir une structure formant piètement et un siège qui résistent aux efforts dynamiques décrits ci-dessus, mais aussi à des efforts statiques accrus par rapport à l'art antérieur, notamment 4.5 g vers le haut et 4.5 g latéralement. L'invention a également pour but simultanément de ne pas alourdir un tel siège par rapport à l'art antérieur, de permettre son intégration dans une cabine d'appareil de transport aérien en commun, tout en procurant un confort acceptable (place pour les pieds, les bagages...) dans un minimum d'espace. L'invention a aussi pour objectif de proposer une structure formant piètement qui puisse être substituée à la structure formant piètement des sièges équipant déjà les appareils de transport aérien en commun, afin de les rendre conformes aux nouvelles normes et exigences mentionnées cidessus.

L'invention propose donc une structure formant piètement pour siège d'appareil de transport aérien — notamment pour siège de passager d'avion de ligne —, associée ancrée à la structure fixe de l'appareil — notamment au sol — par au moins un ancrage avant d'un pied avant et par au moins un ancrage arrière d'un pied arrière, les pieds avant et arrière étant associés à l'ossature du siège, le pied avant s'étendant, en position normale, au moins sensiblement verticalement à partir de son ancrage avant inférieur — notamment perpendiculairement au sol de l'appareil, les pieds avant et arrière étant articulés par leurs extrémités supérieures respectives à l'ossature du siège de façon à pouvoir pivoter autour d'axes de pivotement horizontaux et transversaux, un dispositif d'absorption d'énergie étant associé à l'ancrage avant inférieur caractérisée en ce que le dispositif d'absorption d'énergie et associé à la partie supérieure du pied arrière mais à distance de l'articulation arrière supérieure et en ce qu'elle comporte des moyens limitant ou empêchant le pivotement vers l'avant du pied arrière autour de son ancrage arrière à la structure fixe de l'appareil.

L'invention propose aussi un mode particulier de réalisation de cette structure où le pied arrière est en forme de console dont la convexité est orientée vers l'avant et est associé par son extrémité supérieure articulé à l'arrière de l'ossature du siège de façon à pouvoir pivoter autour d'un axe de pivotement horizontal transversal par rapport à cette ossature, et où ce pied arrière et la structure sont constitué d'une façon telle que ce pied arrière subit, lorsque la structure se déforme, une déformation en flexion vers l'avant dont l'axe de rotation en flexion théorique ou imposé est sensiblement à la verticale de la position initiale normale de l'axe d'articulation du pied arrière à l'ossature du siège. Cet axe de rotation en flexion est écarté vers le haut de la structure fixe. Par ailleurs, le pied avant s'étend, en position normale, au moins sensiblement verticalement à partir de son ancrage avant — notamment perpendiculairement au sol de l'appareil —, et l'ancrage avant comporte une articulation permettant au pied avant de pivoter vers l'avant à partir de sa position normale autour d'un axe de pivotement horizontal transversal de cet ancrage avant. La forme générale et les zones d'association du dispositif d'absorption d'énergie sont telles que l'orientation du dispositif d'absorption d'énergie par rapport à la structure fixe reste sensiblement la même lors de la déformation de la structure. Le dispositif d'absorption d'énergie est dimensionné pour être actif sans venir en butée pour des valeurs d'effort orienté selon son axe comprises entre une valeur donnée minimale $F_0$ non nulle et une valeur donnée maximale $F_1$.

Un siège selon l'invention comporte une structure formant piètement selon l'invention qui permet de l'associer rigidement à la structure fixe de l'appareil, notamment dans des rails d'association du sol de cet appareil.

Un siège selon l'invention, muni d'au moins une structure formant piètement selon l'invention, possède une résistance accrue lors d'un écrasement au sol de l'appareil et absorbe une grande partie de l'énergie du choc selon les directions de décélérations maximales, au bénéfice du passager. De plus, lors des mouvements de la structure formant piètement selon l'invention, l'assiette du siège est sensiblement conservée, et le passager reste assis dans le siège. De plus, l'invention procure un siège léger, confortable (l'espace sous le siège restant libre), un piètement peu encombrant et parfaitement stable et rigide dans les conditions normales d'utilisation. Un siège selon l'invention peut subir des tests dynamiques et statiques sévères.

D'autres caractéristiques et avantages de l'invention apparaîtront à la lecture de la description suivante de ses modes de réalisation préférentiels qui sont représentés sur les figures annexées dans lesquelles :

- la figure 1 est une vue de profil d'une structure formant piètement selon un premier mode de réalisation de l'invention.
- la figure 2 est une vue de profil d'une structure formant piètement selon un second mode de réalisation de l'invention.
- la figure 3 est une vue en coupe partielle selon un plan vertical longitudinal de l'ancrage avant d'une structure formant piètement selon l'invention.

L'invention concerne une structure 1 formant piètement pour siège d'appareil de transport aérien. Sur les figures, la structure est représentée en position normale d'utilisation en traits continus, et en position déplacée après un choc tel que celui dû à l'écrasement de l'appareil au sol, en traits mixtes pointillés. Le siège en tant que tel n'est pas représenté sur les figures. Les termes "avant" et "arrière" sont définis classiquement par rapport au siège, le passager étant tourné vers l'avant lorsqu'il est assis.La structure formant piètement du siège est associée à la structure fixe 3 de l'appareil, généralement au sol 3 de cet appareil. Le sol 3 étant généralement sensiblement horizontal lorsque l'appareil est à l'arrêt au sol, on définit les directions horizontales comme les directions parallèles au sol 3 et la direction verticale comme étant perpendiculaire au sol 3 de sens positif vers le bas. La direction horizontale transversale est la direction horizontale parallèle au dossier de sens positif vers la droite (perpendiculaire au plan des figures), et la direction horizontale longitudinale est perpendiculaire à la direction horizontale transversale de sens positif vers l'avant et contient les sens avant et arrière (contenue dans le plan des figures). Dans toute la suite les termes "horizontal" et "vertical" sont relatifs et se réfèrent soit aux concepts physiques habituels, soit aux directions locales de l'appareil définies ci-dessus.

Le siège comporte une ossature 2 définissant l'assise et le dossier de ce siège et supportant les coussins et leurs dispositifs annexes.

L'invention propose une structure formant piètement pour siège d'appareil de transport aérien — notamment pour siège de passager d'avion de ligne —, associée d'une part ancrée à la structure fixe 3 de l'appareil — notamment au sol 3 — par au moins un ancrage avant 4 d'un pied avant 5 et par au moins un ancrage arrière 7 d'un pied arrière 8, et associée d'autre part à l'ossature du siège, les pieds avant et arrière étant articulés à l'ossature 2 autour d'axes 11, 12 de pivotement horizontal transversal par une articulation avant supérieure 9 et une articulation arrière supérieure 10, la structure 1 comportant par ailleurs, au moins un dispositif spécifique d'absorption d'énergie 13 associé au voisinage de ou à l'ancrage avant 4 et associé au pied arrière 8 caractérisé en ce que le dispositif d'absorption d'énergie 13 est associé à la partie supérieure 35 du pied arrière 8 mais à distance vers le bas de l'articulation 10 et en ce qu'elle comporte des moyens 23 limitant ou empêchant le pivotement vers l'avant du pied arrière 8 autour de son ancrage arrière 7 à la structure fixe 3.

L'invention propose aussi un mode particulier de réalisation de cette structure où le pied arrière 8 est en forme de console dont la convexité est orientée vers l'avant et est associé par son extrémité supérieure 14 articulé à l'arrière de l'ossature 2 du siège de façon à pouvoir pivoter autour d'un axe 12 de pivotement horizontal transversal par rapport à cette ossature 2, et où ce pied arrière 8 et la structure 1 sont constitués d'une façon telle que ce pied arrière 8 subit, lorsque la structure 1 se déforme, une déformation en flexion vers l'avant dont l'axe de rotation en flexion 37 théorique ou imposé est éloigné de l'ancrage arrière 7 et sensiblement à la verticale de la position initiale normale de l'axe 12 d'articulation du pied arrière 8 à l'ossature 2 du siège. Le pied arrière 8 est constitué d'une façon telle que l'axe de rotation en flexion 37 théorique ou imposé est écarté vers le haut de la structure fixe 3.

On verra par la suite que cet axe de rotation en flexion 37 peut être théorique si le pied arrière 8 se déforme élastiquement ou plastiquement en flexion, et correspond à l'axe de rotation résultant de cette flexion structurelle, ou imposé si le pied arrière 8 est composé de deux parties 35, 36 articulées l'une à l'autre.

Le dispositif d'absorption d'énergie 13 est associé à la partie supérieure 35 du pied arrière 8 au-dessus de la zone 25 de courbure maximale du pied arrière 8 et à la zone 24 du pied arrière 8 qui est située la plus vers l'avant lorsque ce pied arrière 8 est en position normale.

Selon un autre mode de réalisation de l'invention les deux zones d'association 18, 24 du dispositif d'absorption d'énergie 13 à la structure 1 définissent une direction au moins voisine d'une direction probable de la décélération lors du contact de l'appareil avec le sol en cas d'écrasement. Cette direction probable de la décélération correspond généralement en pratique à une direction voisine de la verticale vraie, l'appareil étant incliné vers l'avant et vers le bas, notamment de 30° par rapport à l'horizontale vraie. Le dispositif d'absorption d'énergie 13 doit donc, lorsque le siège est incliné vers l'avant et vers le bas d'environ 30°, définir une direction la plus voisine possible de la verticale, ce qui est le cas avec une structure 1 selon l'invention.

De plus, afin de satisfaire au mieux aux deux tests dynamiques différents prévus par la nouvelle réglementation (d'une part, décélération longitudinale de 16 g lorsque le siège est horizontal et d'autre part, décélération verticale de 14 g avec une inclinaison du siège vers le bas et vers l'avant de 30°), il est souhaitable que les efforts subis et absorbés par le dispositif d'absorption 13 soient similaires pour ces deux tests. Par conséquent, selon un mode particulier de réalisation de l'invention, les deux zones d'association 18, 24 du dispositif d'absorption d'énergie 13 à la structure 1 définissent une direction orientée de façon telle que les efforts projetés sur cette direction résultant d'une décélération longitudinale de 16 g le siège étant horizontal et d'une décélaration verticale de 14 g lorsque le siège est incliné vers le bas et vers l'avant de 30°, sont sensiblement les mêmes. La valeur optimale théorique donnée par le calcul est une direction définie par les zones 18, 24 formant un angle $\alpha$ avec l'horizontale de l'ordre de 37°.

La forme générale de la structure 1 selon un mode particulier de réalisation de l'invention — notamment celle du pied arrière 8 — et les zones d'association 18, 24 du dispositif d'absorption d'énergie 13 à la structure 1 sont telles que l'orientation du dispositif d'absorption 13 par rapport à la structure fixe 3 reste sensiblement la même, notamment forme

un angle $\alpha$ de l'ordre de 37° avec l'horizontale, lors de la déformation de la structure 1. Cette forme générale telle que représentée sur les figures 1 et 2 et les caractéristiques mentionnées ci-dessus de l'invention, permettent de réaliser un compromis inattendu puisque la position initiale permet une absorption optimale, et que l'assiette du siège est conservée avec une course de déplacement vertical vers le bas du siège minimale, à l'avant comme à l'arrière. De plus, la résistance du dispositif d'absorption d'énergie 13 peut être déterminée avec précision.

Ainsi, une structure 1 formant piètement selon l'invention peut absorber une grande quantité d'énergie, et ce selon les directions de choc statistiquement les plus fréquentes et les plus importantes lors d'un écrasement de l'appareil au sol.

Selon un autre mode de réalisation de l'invention, l'ancrage avant 4 comporte une articulation permettant au pied avant 5 de pivoter vers l'avant à partir de sa position normale autour d'un axe 6 de pivotement horizontal transversal de cet ancrage avant 4. De plus, le pied avant 5 s'étend, en position normale (c'est-à-dire dans des conditions autres que celles d'un accident), au moins sensiblement verticalement à partir de son ancrage avant 4 — notamment perpendiculairement au sol 3 de l'appareil —. De la sorte, le seul poids du passager, en utilisation normale, n'a pas tendance à déformer la structure 1 et ne sollicite pas ou peu le dispositif d'absorption d'énergie 13. Au contraire, la structure 1 formant piètement selon l'invention est parfaitement rigide et stable dans les conditions normales d'utilisation et de vol de l'appareil.

De préférence, une structure 1 selon l'invention comporte un et un seul dispositif d'absorption d'énergie 13 entre le pied arrière 8 et l'ancrage avant 4 par couple de pieds formée d'un pied avant 5 et d'un pied arrière 8. Une structure 1 formant piètement pour un siège tel qu'un siège à trois places, comporte généralement au moins deux couples similaires de pieds avant 5 et arrière 8, espacées l'une de l'autre transversalement, le pied avant 5 de chaque couple étant en regard longitudinalement du pied arrière 8. Une seule couple de pieds est représentée et décrite. La structure 1 est associée au sol 3 et le siège proprement dit (c'est-à-dire son ossature 2, son assise, son dossier...) est associé à la structure 1 et maintenu à distance du sol 3 par cette structure 1 qui est intervalée entre le sol 3 et le siège.

De préférence, le dispositif d'absorption d'énergie 13 est constitué de deux organes 15, 16 susceptibles de pouvoir coulisser l'un par rapport à l'autre selon un axe 17, le mouvement de coulissement s'accompagnant de dissipation d'énergie mécanique (déformation plastique, frottement....) et, lors d'absorption de décélérations, d'une diminution de la longueur totale selon l'axe 17 du dispositif d'absorption d'énergie 13. L'axe 17 de coulissement des deux organes 15, 16 l'un par rapport à l'autre forme avec l'horizontale de l'appareil, au moins lorsque la structure est en position normale non déformée, un angle $\alpha$ supérieur ou égal à 30°, inférieur ou égal à 60°, notamment de l'ordre de 37° pour que les conditions d'absorption d'énergie soient les mêmes pour les deux tests dynamiques prévus par la réglementation NPRM 86-11.

De préférence, le dispositif d'absorption d'énergie 13 est constitué d'une tige rigide 15 dont une extrémité 20 est associée, au reste de la structure 1, — notamment rigidement à l'ancrage avant 4 ou articulée au pied arrière 8 autour d'un axe 26 — et dont l'autre extrémité 21 est acérée et engagée dans un bloc 16 de matière synthétique plastique ou équivalente, de sorte que cette extrémité acérée 21 de la tige 15 peut pénétrer dans le bloc 16 en coupant la matière qui le constitue, à partir d'une certaine valeur de la force de pression de la tige 15 sur le bloc 16. Le bloc 16 est aussi associé au reste de la structure 1, à l'opposé de l'extrémité 20 d'association de la tige 15 à la structure 1. Ainsi, si la tige 15 est associée à l'ancrage inférieur avant 4, le bloc 16 est associé au pied arrière 8. Par contre, si la tige 15 est associée au pied arrière 8, le bloc 16 est associé à l'ancrage inférieur avant 4.

L'utilisation d'un dispositif d'absorption d'énergie 13 du type à compression, confère une plus grande sécurité au siège lors d'un accident violent qui l'amènerait en butée, par rapport à un dispositif du type à traction qui peut se rompre plus facilement lorsqu'il est totalement étiré. De plus, un tel dispositif 13 à compression est compact, peut être inséré avantageusement et selon la bonne inclinaison entre le pied avant et le pied arrière, est peu coûteux et peut être facilement et précisément adapté en résistance.

Selon un mode particulier de réalisation de l'invention, le pied arrière 8 est en forme de console dont la convexité est orientée vers l'avant et est associé par son extrémité supérieure 14 articulé à l'arrière de l'ossature 2 du siège — notamment à la poutre transversale arrière 33, c'est-à-dire sous la jonction de l'assise et du dossier du siège —, de façon à pouvoir pivoter autour d'un axe 12 de pivotement horizontal transversal par rapport à cette ossature 2, et le dispositif d'absorption d'énergie 13 est associé au pied arrière 8 en une zone 24 située au-dessus de la zone 25 de courbure maximum du pied arrière 8. On a en effet constaté de meilleures performances d'amortissement lors des chocs lorsque la zone 24 d'association du dispositif d'absorption d'énergie au pied arrière 8 est située au-dessus de la zone 25 de courbure maximale. De plus, il faut éviter une trop faible inclinaison de ce dispositif d'absorption d'énergie 13, pour empêcher un écrasement de l'arrière du siège vers le bas en cas de choc. C'est une raison supplémentaire pour que l'angle $\alpha$ soit supérieur à 30°. Le dispositif d'absorption d'énergie 13 est associé articulé au pied arrière 8 de façon à pouvoir pivoter par rapport au pied arrière 8 autour d'un axe 26 de pivotement horizontal transversal.

L'articulation du pied arrière 8 à la poutre transversale arrière 33 constitue l'articulation arrière 10 supérieure de la structure 1 à l'ossature 2.

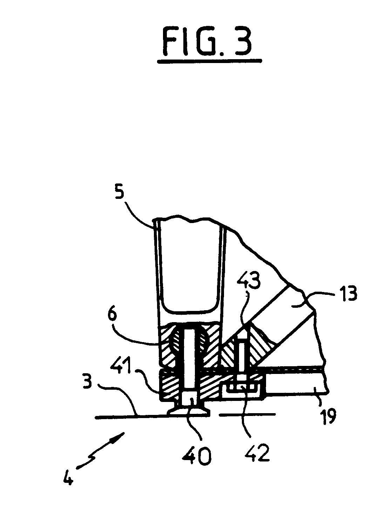

Par contre, le dispositif d'absorption d'énergie 13 est associé rigidement au voisinage de ou à l'ancrage avant 4, sans possibilité de pivotement autour d'un axe horizontal transversal (figure 3). En effet, la cinématique et les dimensions de la structure 1 sont telles que lors de sa déformation, le dispositif d'absorption d'énergie 13 reste sensiblement selon le même axe 17, sans pivoter autour de l'ancrage avant 4, ou de façon négligeable. Cependant, en variante, un axe de pivotement horizontal transversal pourra être prévu si cela s'avère nécessaire.

Selon l'invention, des moyens 23 limitent ou empêchent le pivotement vers l'avant au moins de la partie inférieure 36 du pied arrière 8 autour de son ancrage arrière 7 à la structure fixe 3. La déformation de la structure 1 selon l'invention ne peut donc pas se faire par pivotement vers l'avant du pied arrière 8 autour de son ancrage arrière inférieur 7 qui pourrait ne pas comporter d'axe horizontal transversal de pivotement. Dans la pratique, et comme représenté l'ancrage arrière 7 comporte un axe 22 de pivotement horizontal transversal qui a surtout pour fonction de permettre l'association de l'ancrage arrière 7 double au rail de la structure fixe 3 par pivotement de cet ancrage 7 autour de l'axe 22. L'axe 22 sert donc au montage de la structure 1 sur la structure fixe 3. Dans ce cas, les moyens 23 limitant ou empêchant le pivotement vers l'avant du pied arrière 8 sont constitués d'une butée formée d'une rampe 23 de l'extrémité inférieure 31 du pied arrière 8 qui coopère contre une surface 27 d'un organe fixe 19 solidaire de la structure fixe 3, notamment le longeron inférieur 19 de rigidification. Sur les figures, la rampe 23 s'étend vers l'avant sensiblement horizontalement à partir de l'extrémité inférieure 31 du pied arrière et coopère avec sa face inférieure contre la surface supérieure de l'extrémité arrière 30 du longeron 19.

Le pied arrière 8 ne pouvant pas pivoter vers l'avant, il est soit composé de deux parties articulées, soit soumis à une déformation structurelle lorsque la structure 1 elle-même se déforme sous l'effet d'une décélération, comme on le verra ultérieurement. La forme générale de console à convexité orientée vers l'avant du pied arrière 8 offre, en combinaison avec les caractéristiques précédemment décrites, des avantages prépondérants.

Selon un autre mode de réalisation de l'invention, le dispositif d'absorption d'énergie 13 s'étendant entre le pied arrière 8 et l'ancrage avant 4 est dimensionné pour être actif et le rester, c'est-à-dire sans venir en butée, pour des valeurs d'effort orienté selon son axe 17 qui sont comprises entre une valeur donnée minimale non nulle $F_0$ et une valeur donnée maximale $F_1$. La valeur minimale $F_0$ étant non nulle, la structure 1 ne peut pas se déformer sous l'effet de décélérations inférieures à celles correspondant aux valeurs critiques minimale définissant un accident.

Ainsi, pour les efforts normaux subis par le dispositif d'absorption d'énergie 13 selon son axe 17 compris entre 0 et $F_0$, celui-ci n'est pas actif et ne se déforme pas, la structure 1 restant rigide indéformable. A partir de $F_0$ et jusqu'à $F_1$ le dispositif 13 est actif et susceptible d'absorber l'énergie du choc sans venir en butée. A partir de $F_1$, le dispositif d'absorption d'énergie 13 vient en butée et ne peut plus absorber toute l'énergie qu'il reçoit. En pratique, par exemple, $F_0$ correspond à une décélération longitudinale du sol de 9 g et $F_1$ correspond à une décélération longitudinale du sol 3 de 20 g.

Deux modes de réalisation distincts de l'invention sont représentés sur les figures 1 et 2.

Dans le premier mode de réalisation représenté en figure 1, le pied arrière 8 est associé à la structure fixe 3 de l'appareil et à l'ossature 2 du siège, et est rigide et dimensionné — notamment en épaisseur —, d'une façon telle qu'il reste rigide, quasi immobile et indéformable dans des conditions normales d'utilisation mais se déforme plastiquement — notamment dans le sens d'une diminution de sa courbure — lorsque la décélération subie par le siège et son (ou ses) passager(s) dépasse une valeur déterminée correspondant à une situation d'accident et sollicite la structure 1 en déformation, de sorte que cette déformation de la structure 1 n'a lieu qu'avec dissipation d'énergie de déformation élastique puis plastique du pied arrière 8.

Le pied arrière 8 est dimensionné de façon à commencer à se déformer plastiquement — notamment dans le sens d'une diminution de courbure — à partir d'une décélération subie par le siège et son passager qui entraîne un effort donnant lieu à une dissipation d'énergie dans le dispositif d'absorption d'énergie 13 (c'est-à-dire supérieur à $F_0$), et de préférence à partir d'une décélération ne mettant pas ce dispositif 13 en butée (c'est-à-dire pour un effort inférieur à $F_1$). De la sorte, la dissipation d'énergie par déformation plastique du pied arrière 8 commence pour une décélération engendrant déjà une dissipation d'énergie dans le dispositif d'absorption d'énergie 13, les deux dissipations s'additionnant l'une à l'autre pour absorber l'énergie du choc. Pour les décélérations inférieures, le pied arrière 8 ne se déformera que légèrement, notamment dans le domaine élastique, voire pas du tout.

Par contre, le pied avant 5 et l'ossature 2 — notamment les longerons et/ou les poutres traversales 32, 33 auxquels la structure 1 est associée —, sont dimensionnés pour rester rigides indéformables ou seulement élastiquement déformables dans la plage des décélérations qui n'entraînent pas de rupture mécanique dans la structure 1.

Le dimensionnement de ces divers éléments consiste à déterminer, par des méthodes connues de calcul des structures, essentiellement leur forme et leur répartition en épaisseur en fonction du matériau utilisé et des contraintes qu'ils subissent.

Le dimensionnement de la structure 1 est fait en tenant compte d'un poids de 77,11 kg (170 livres avoirdupois) pour chaque passager. Par exemple, à partir d'une décélération longitudinale de 9 g, et jusqu'à par exemple 14 g ou 16 g, le pied arrière 8 ne se déforme que légèrement, dans le domaine élastique, et le dispositif d'absorption d'énergie 13 est actif mais ne vient pas en butée. Pour des décélérations longitudinales supérieures à 14 g ou 16 g, et par exemple jusqu'à 20 g, le dispositif d'absorption d'énergie 13 est toujours actif, mais le pied arrière 8 dissipe aussi une grande quantité d'énergie par déformation plastique. Pour une décélération longitudinale supérieure à 20 g, une rupture mécanique peut être occasionnée. Une échelle similaire peut être déterminée pour les décélérations verticales et la structure 1 dimensionnée en conséquence. L'inclinaison optimale du dispositif d'absorption d'énergie 13 est d'ailleurs conditionnée par le rapport entre la décélération longitudinale critique (9 g) et la décélération verticale critique engendrant toutes deux l'effort minimal $F_0$ selon l'axe 17 qui est une caractéristique intrinsèque du dispositif 13. Le pied arrière 8 est dimensionné pour se déformer à partir d'une décélération correspondant à une décélération longitudinale de l'ordre de 15 g, notamment 14 g ou 16 g.

Dans un second mode de réalisation représenté en figure 2, le pied arrière 8 comporte une branche 35 supérieure articulée d'une part à l'ossature 2 et, d'autre part, à une partie fixe 36 inférieure du pied arrière 8, pour pouvoir pivoter vers l'avant à partir de sa position normale autour d'un axe 37 de pivotement horizontal transversal éloigné de l'ancrage arrière 7 par ladite partie fixe 36. L'axe 37 de pivotement de la branche 35 supérieure est éloigné vers le haut de l'ancrage arrière 7 et surélevé par rapport à la structure fixe 3, notamment d'une hauteur h de l'ordre de 105 mm. L'axe 37 de pivotement de la branche 35 supérieure est éloigné vers l'avant de l'ancrage arrière 7, notamment d'une distance d, par exemple de l'ordre de 135 mm, telle qu'il est, en position normale de la branche 35 supérieure, à la verticale ou en avant de la verticale de l'articulation 10 de la branche 35 supérieure à l'ossature 2. De préférence l'axe 37 de pivotement est à l'extrémité 4-6 de la partie 36 inférieure rectiligne du pied arrière 8, la partie 35 supérieure incluant la zone 25 du pied arrière 8 où la courbure est la plus forte.

De préférence, la partie fixe 36 du pied arrière 8 est constituée d'une branche inférieure 36, associée d'une part à l'ancrage arrière 7 et, d'autre part, à la branche supérieure 35 par l'axe 37 de pivotement, les deux branches 35, 36 venant en prolongement continu l'une de l'autre en position normale et définissant le pied arrière 8 en forme de console à convexité orientée vers l'avant. La branche inférieure 36 est rectiligne et s'étend vers le haut et vers l'avant à partir de l'ancrage arrière 7 sur lequel elle est montée et supporte l'axe de pivotement 37 à son extrémité libre supérieure 46. La branche supérieure 35 est en forme de console à convexité orientée vers l'avant et prolonge de façon continue la branche inférieure 36 à partir de l'axe de pivotement 37 sur lequel s'extrêmité inférieure libre 45 de la branche supérieure 35 est montée.

Dans ce second mode de réalisation, plusieurs variantes peuvent être prévues pour la déformation de la structure 1 formant piètement.

Dans une première variante, le pied arrière 8 est dimensionné de telle sorte qu'il ne se déforme pas plastiquement, ou uniquement à partir de certains valeurs de décélération supérieurs à F1, seul le dispositif d'absorption d'énergie 13 permettant d'absorber l'énergie d'une décélération. L'articulation 37 est donc conçue pour autoriser un pivotement de la branche mobile supérieure 35 par rapport à la branche fixe inférieure 36 pour toute la course de déformation du dispositif d'absorption d'énergie 13.

Dans une deuxième variante, le pied arrière 8 est dimensionné de telle sorte que la branche mobile courbe supérieure 35 qui correspond à la portion du pied arrière 8 dont la courbure est la plus forte puisse se déformer plastiquement à partir d'une valeur de décélération supérieure ou égale à F0 et inférieure à F1. De la sorte, l'absorption d'énergie peut se faire dans le dispositif spécifique 13 prévu à cet effet et dans la déformation de la branche courbe 35 du pied arrière 8 dans la domaine plastique. Des moyens formant butée limitant le pivotement vers l'avant de la branche supérieure 35 peuvent être prévus de sorte qu'à partir d'une certaine course de pivotement de la branche supérieure 35 autour de l'axe 37, le pied arrière 8 doive se déformer et participer à l'absorption de l'énergie. Sans pivotement intérieur de la branche supérieure 35.

Dans les deux variantes précédentes de ce second mode de réalisation, on peut prévoir un dispositif d'absorption d'énergie supplémentaire intercalé entre les deux branches 35, 36 au voisinage de l'axe 37 de pivotement. Par exemple l'extrêmité inférieure avant 45 de la branche supérieure 35 supporte un couteau ou est acérée et prolongée en forme de couteau de façon à pouvoir pénétrer dans une rainure correspondante de l'extrêmité libre supérieure 46 de la branche fixe inférieure 36 du pied arrière 8 tout en déchirant une matière déchirable telle que des bandes de tissu ou de la mousse synthétique. Dans ce cas, et en combinaison avec la deuxième variante, la structure 1 comporte trois zônes d'absorption d'énergie : Le dispositif 13 spécifique intercalé entre le pied arrière 8 et l'ancrage avant 4, la branche supérieure mobile 35 du pied arrière 8 qui se déforme plastiquement, et le dispositif d'absorption d'énergie intercalé entre les deux branches 35 36 du pied arrière 8.

De préférence, on prévoit des moyens 38 formant butée empêchant tout pivotement vers l'arrière de la branche supérieure 35 du pied arrière 8 à partir de sa position normale. Ces moyens 38 sont constitués par exemple de deux parties extrêmes des branches 35, 36 coopérant entre elles à l'arrière de l'axe 37 pour former butée comme illustré en figure 2.

On peut aussi prévoir un dispositif empêchant le pivotement intempestif de la branche supérieure 35 autour de l'axe 37 vers l'avant pour des décélérations faibles, par exemple constitué d'un téton 39 plastique solidaire de l'extrêmité 46 de la branche fixe 36 formant butée avant pour l'extrêmité inférieure 43 de la branche supérieure 35. Ce téton 39 peut être cassé ou plié par de fortes décélérations, mais résiste pour de faibles décélérations, notamment sous le poids du passager.

Dans ce second mode de réalisation, le déplacement longitudinal D′ de l'extrémité supérieure 14 du pied arrière 8 est plus importante pour un déplacement vertical de cet extrémité 14 plus faible et une course de débattement du dispositif d'absorption d'énergie 13 plus faible. Il en résulte principalement comme avantage que l'assiette du siège est encore mieux conservée lors de la déformation de la structure 1 et une possiblité d'absorber de l'énergie plus longtemps.

Dans les deux modes de réalisation décrits pour améliorer la rigidité de la structure 1, on prévoit en outre un longeron inférieur 19 monobloc associé directement à l'ancrage avant 4 du pied avant 5 et à l'ancrage arrière 7 du pied arrière 8 pour maintenir les deux ancrages 4, 7 à distance constante l'un de l'autre, même lorsque la décélération subie par le siège et le passager correspond à une situation d'accident.

Les ancrages 4, 7 de la structure 1 au sol sont constitués de têtons simples ou doubles coopérant avec un rail de la structure fixe 3 de l'appareil, de façon connue en soi. De préférence, l'ancrage avant 4 est simple, tandis que l'ancrage arrière 7 est double pour une meilleure répartition des efforts sur le rail lorsque l'ancrage arrière 7 travaille à l'arrachement.

L'ancrage avant 4 représenté en figure 3 comporte un têton 40 fixé dans un rail de la structure fixe 3 de l'appareil et s'étendant vers le haut en traversant le longeron inférieur 19 pour s'engager dans l'extrémité inférieure du pied avant 5 et coopérer avec l'axe de pivotement inférieur 6 de ce pied avant 5. Le têton 40 est solidaire de l'axe de pivotement 6 qu'il maintient par rapport à la structure fixe 3. Une nervure longitudinale est ménagée dans la partie extrême inférieure avant 41 du pied avant 5, en regard du têton 40 pour permettre le pivotement vers l'avant du pied avant 5 autour de l'axe 6. Un blocage plastique peut être prévu dans cette nervure pour éviter un pivotement intempestif. Ce blocage est détruit en cas de fortes décélérations.

En variante, on ne prévoit pas une telle nervure, la partie antérieure inférieure 41 du pied avant 5 étant pleine, mais le têton est fragilisée ou plastique dans sa partie sous l'axe du pivotement 6.

Le dispositif d'absorption d'énergie 13 est associée rigidement en 18 par son extrémité inférieure avant à l'extrémité avant du longeron 19 contre l'ancrage avant 4. Pour ce faire, une vis 42 est engagée sous le longeron 19 qu'elle traverse pour coopérer avec un taraudage 43 ménagé dans le dispositif d'absorption d'énergie 13.

En position normale, pour une distance entre les ancrages 4, 7 de l'ordre de 433 mm, et une hauteur $h_1$ de l'articulation arrière supérieure 10 de l'ordre de 307 mm par rapport au sol 3, le point 24 d'association du dispositif 13 au pied arrière 8 est à une hauteur $h_2$ de l'ordre de 213 mm, est avancé vers l'avant de l'ancrage arrière 7 d'une distance $d_1$ de l'ordre de 207 mm, et à une distance $d_2$ de l'ordre de 61 mm vers le haut de la droite joignant le point arrière 25 de courbure maximum et le centre C de courbure. La course de débattement D du dispositif d'absorption d'énergie 13 est de l'ordre de 55 mm dans le premier mode de réalisation et de l'ordre de 47 mm dans le second mode de réalisation. La course de débattement longitudinal D′ de l'articulation arrière 10 supérieure est de l'ordre de 50 mm dans le premier mode de réalisation et de l'ordre de 80 mm dans le second mode de réalisation.

La structure 1 formant piètement selon l'invention peut être réalisée de façon très économique, et, avec des éléments standards similaires à ceux utilisés pour une structure indéformable antérieure. Les autres éléments nécessaires au confort et/ou à la sécurité, connus pour les structure indéformables, pourront être adaptés à une structure 1 selon l'invention (barre périphérique pour bagages, repose-pieds...).

Un siège d'appareil de transport aérien — notamment de passager d'avion de ligne — selon l'invention est caractérisé en ce qu'il comporte un piètement formé d'une structure 1 selon l'invention. Plusieurs couples de pieds 5, 8 avant, arrière telles que celle représentée sont prévues pour chaque siège, afin d'assurer l'ancrage correct du siège sur le sol 3 de l'appareil. Des barres transversales peuvent être prévues pour associer les couples de pieds 5, 8 avant, arrière les unes aux autres et rigidifier le piètement du siège tout en formant une barrière pour les bagages sous le siège.

Deux couples de pieds 5, 8 avant, arrière sont suffisantes pour un siège à deux ou trois places.

De préférence, dans un siège selon l'invention, l'articulation avant 9 associe la structure 1 à la poutre transversale 32 avant du siège, et l'articulation arrière 10 associe la structure 1 à la poutre transversale arrière 33 du siège.

Les déformations de la structure 1 lors d'un choc engendrant une dissipation d'énergie dans le dispositif d'absorption d'énergie 13 et par déformation plastique du pied arrière 8 sont illustrées sur les figures en traits mixtes pointillés. Ces déformations représentées de pivotement de la structure 1 vers l'avant sont typiquement celles résultant d'un écrasement de l'appareil au sol. L'assise du siège reste sensiblement horizontale et à un niveau proche de celui qu'elle occupait à l'origine.

## Revendications

1. Structure formant piètement pour siège d'appareil de transport aérien — notamment pour siège de passager d'avion de ligne —, associée ancrée à la structure fixe (3) de l'appareil — notamment au sol (3) — par au moins un ancrage avant (4) d'un pied avant (5) et par au moins un ancrage arrière (7) d'un pied arrière (8), les pieds avant (5) et arrière (7) étant associés à l'ossature (2) du siège, le pied avant (5) s'étendant, en position normale, au moins sensiblement verticalement à partir de son ancrage avant inférieur (4) — notamment perpendiculairement au sol (3) de l'appareil, les pieds avant (5) et arrière (7) étant articulés par leurs extrémités supérieures (9, 10) respectives à l'ossature (2) du siège de façon à pouvoir pivoter autour d'axes (11, 12) de pivotement horizontaux et transversaux, un dispositif d'absorption d'énergie (13) étant associé à l'ancrage avant inférieur (4) caractérisée en ce que le dispositif d'absorption d'énergie (13) est associé à la partie supérieure (35) du pied arrière (8) mais à distance de l'articulation arrière supérieure (10) et en ce qu'elle comporte des moyens (23) limitant ou empêchant le pivotement vers l'avant du pied arrière (8) autour de son ancrage arrière (7) à la structure fixe (3) de l'appareil.

2. Structure selon la revendication 1 caractérisée en ce que le pied arrière (8) est en forme de console dont la convexité est orientée vers l'avant de sorte que le pied arrière (8) subit, lorsque la structure (1) se déforme, une déformation en flexion vers l'avant dont l'axe de rotation en flexion (37) théorique ou imposé est éloigné de l'ancrage arrière (7) et sensiblement à la verticale de la position initiale normale de l'axe (12) d'articulation du pied arrière (8) à l'ossature (2) du siège.

3. Structure selon la revendication 2, caractérisée en ce que le pied arrière (8) est constitué d'une façon telle que l'axe de rotation en flexion (37) théorique ou imposé est écarté vers le haut de la structure fixe (3) de l'appareil.

4. Structure selon l'une quelconque des revendications 1 à 3, caractérisée en ce que l'ancrage avant (4) comporte une articulation permettant au pied avant (5) de pivoter vers l'avant à partir de sa position normale autour d'un axe (6) de pivotement horizontal transversal de cet ancrage avant (4).

5. Structure selon l'une quelconque des revendications 2 à 4, caractérisée en ce que le dispositif d'absorption d'énergie (13) est associé à la partie supérieure (35) du pied arrière (8) au-dessus de la zone (25) de courbure maximale du pied arrière (8).

6. Structure selon l'une quelconque des revendications 2 à 5, caractérisée en ce que le dispositif d'absorption d'énergie (13) est associé à la zone (24) du pied arrière (8) située la plus vers l'avant en position normale.

7. Structure selon l'une quelque quelconque des revendications 1 à 6, caractérisée en ce que le dispositif d'absorption d'énergie (13) est associé articulé au pied arrière (8) de façon à pouvoir pivoter autour d'un axe (26) de pivotement horizontal transversal.

8. Structure selon l'une quelconque des revendications 1 à 7 caractérisée en ce que le dispositif d'absorption d'énergie (13) est associé rigidement au voisinage de ou à l'ancrage avant (4), sans possibilité de pivotement autour d'un axe horizontal transversal.

9. Structure selon l'une quelconque des revendications 1 à 8, caractérisée en ce que les deux zones d'association (18, 24) du dispositif d'absorption d'énergie (13) à la structure (1) définissent une direction orientée d'une façon telle que les efforts projetés sur cette direction résultant d'une décélération longitudinale de 16 g le siège étant horizontal et d'une décélération verticale de 14 g le siège étant incliné vers le bas et vers l'avant de 30°, sont sensiblement les mêmes, notamment une direction formant un angle $\alpha$ avec l'horizontale de l'ordre de 37°.

10. Structure selon l'une quelconque des revendications 1 à 9 caractérisée en ce que sa forme générale — notamment celle du pied arrière (8) — et les zones d'association (18, 24) du dispositif d'absorption d'énergie (13) sont telles que l'orientation du dispositif d'absorption d'énergie (13) par rapport à la structure fixe (3) reste sensiblement la même lors de la déformation de la structure (1).

11. Structure selon l'une quelconque des revendications 1 à 10, caractérisée en ce que le dispositif d'absorption d'énergie (13) est constitué de deux organes (15, 16) susceptibles de pouvoir coulisser l'un par rapport à l'autre selon un axe (17), le mouvement de coulissement s'accompagnant de dissipation d'énergie mécanique (déformation plastique, frottement...) et, lors d'absorption de décélérations, d'une diminution de la longueur totale du dispositif d'absorption d'énergie (13), et en ce que l'axe (17) de coulissement des deux organes (15, 16) l'un par rapport à l'autre forme avec l'horizontale de l'appareil, au moins lorsque la structure (1) est en position normale non déformée, un angle ($\alpha$) supérieur ou égal à 30°.

12. Structure selon la revendication 11, caractérisée en ce que l'angle (α) est inférieur ou égal à 60°, notamment de l'ordre de 37°.

13. Structure selon l'une quelconque des revendications 1 à 12, caractérisée en ce qu'elle comporte un et un seul dispositif d'absorption d'énergie (13) par couple de pieds formée d'un pied avant (5) et d'un pied arrière (8).

14. Structure selon l'une quelconque des revendications 1 à 13, caractérisée en ce qu'un dispositif d'absorption d'énergie (13) est constitué d'une tige rigide (15) dont une extrémité (20) est associée au reste de la structure (1), — notamment à l'axe (6) de pivotement inférieur avant ou au pied arrière (8) — et dont l'autre extrémité est acérée et engagée dans un bloc (16) de matière synthétique plastique ou équivalente, de sorte que cette extrémité acérée (21) de la tige (15) peut pénétrer dans le bloc (16) en coupant la matière qui le constitue, à partir d'une certaine valeur de la force de pression de la tige (15) sur le bloc (16).

15. Structure selon l'une quelconque des revendication 1 à 14, caractérisée en ce que l'ancrage arrière (7) associant le pied arrière (8) à la structure fixe (3) comporte un axe (22) de pivotement horizontal transversal et en ce que les moyens (23) limitant ou empêchant le pivotement vers l'avant du pied arrière (8) sont constitués d'une butée formée d'une rampe (23) de l'extrémité inférieure (31) du pied arrière (8) coopérant contre un organe fixe (19) solidaire de la structure fixe (3), notamment le longeron inférieur (19).

16. Structure selon l'une quelconque des revendications 1 à 15, caractérisée en ce que le dispositif d'absorption d'énergie (13) est dimensionné pour être actif sans venir en butée pour des valeurs d'effort orienté selon son axe (17) comprises entre une valeur donnée minimale non nulle $F_0$ et une valeur donnée maximale $F_1$.

17. Structure selon la revendication 16, caractérisée en ce que $F_0$ correspond à un décélération longitudinale de 9 g, et en ce que $F_1$ correspond à une décélération longitudinale de 20 g.

18. Structure selon l'une quelconque des revendications 1 à 17, caractérisée en ce que le pied arrière (8) est rigide et dimensionné — notamment en épaisseur —, d'une façon telle qu'il reste quasi immobile et indéformable dans des conditions normales d'utilisation mais se déforme plastiquement — notamment en flexion dans le sens d'une diminution de sa courbure — lorsque la décélération subie par le siège et son (ou ses) passager(s) dépasse une valeur déterminée correspondant à une situation d'accident et sollicite la structure (1) en déformation, de sorte que cette déformation de la structure (1) n'a lieu qu'avec dissipation d'énergie de déformation élastique puis plastique du pied arrière (8).

19. Structure selon la revendication 18 caractérisée en ce que le pied arrière (8) est dimensionné de façon à commencer à se déformer plastiquement — notamment en flexion dans le sens d'une diminution de courbure — à partir d'une décélération subie par le siège et son passager qui entraîne une dissipation d'énergie dans le dispositif d'absorption d'énergie (13), et en ce que le pied avant (5) et l'ossature (2) — notamment les longerons et/ou les poutres transversales (32, 33) auxquels la structure (1) est associée —, sont dimensionnés pour rester rigides ou seulement plastiquement déformables dans la plage des décélérations qui n'entraînent pas de rupture mécanique dans la structure (1).

20. Structure selon les revendications 17 à 19, caractérisée en ce que le pied arrière (8) est dimensionné pour se déformer à partir d'une décélération correspondant à une décélération longitudinale de l'ordre de 15 g, notamment 14 g ou 16 g.

21. Structure selon l'une quelconque des revendications 1 à 20, caractérisée en ce que le pied arrière (8) est constitué d'une partie fixe inférieure (36) solidaire de la structure fixe (3) de l'appareil et d'une branche supérieure (35) articulée à l'ossature (2) et à cette partie inférieure (36) autour d'un axe de pivotement (37) horizontal transversal.

22. Structure selon la revendication 21, caractérisée en ce que la partie fixe inférieure (36) est constituée d'une branche inférieure (36) rectiligne s'étendant vers le haut et vers l'avant à partir de l'ancrage arrière (7) sur lequel elle est montée et supportant à son extrémité libre supérieure (46) l'axe de pivotement (37) de la branche supérieure (35).

23. Structure selon l'une quelconque des revendications 21 et 22 caractérisée en ce que l'axe (37) de pivotement de la branche (35) supérieure est éloigné vers le haut de l'ancrage arrière (7) et surélevé par rapport à la structure fixe (3), notamment d'une hauteur h de l'ordre de 105 mn.

24. Structure selon l'une quelconque des revendications 21 à 23, caractérisée en ce que l'axe (37) de pivotement de la branche (35) supérieure est éloigné vers l'avant de l'ancrage arrière (7), notamment d'une distance d telle qu'il est, en position normale de la branche (35) supérieure, à la verticale ou en avant de la verticale de l'articulation (10) de la branche (35) supérieure, à l'ossature (2).

25. Structure selon l'une quelconque des revendications 22 à 24, caractérisée en ce que la branche supérieure (35) est en forme de console à convexité orientée vers l'avant et prolonge de façon continue la branche inférieure (36) à partir de l'axe de pivotement (37) sur lequel l'extrêmité inférieure (45) de la branche supérieure (35) est montée.

26. Structure selon l'une quelconque des revendications 21 à 25 caractérisée en ce qu'elle comporte un dispositif d'absorption d'énergie intercalé entre la branche supérieure (35) et la partie fixe inférieure (36) pour absorber l'énergie lors du pivotement vers l'avant de cette branche supérieure (35) autour de son axe de pivotement (37) par rapport à la partie fixe inférieure (36).

27. Structure selon l'une quelconque des revendications 21 à 26, caractérisée en ce qu'elle comporte des moyens (38) formant butée empêchant tout pivotement vers l'arrière de la branche supérieure (35) du pied arrière (8) à partir de sa position normale.

28. Structure selon l'une quelconque des revendications 1 à 27, caractérisée en ce qu'elle comporte en outre un longeron inférieur (19) monobloc associé directement à l'ancrage avant (4) du pied avant (5) et à l'ancrage arrière (7) du pied arrière (8) pour maintenir les deux ancrages (4, 7) à distance constante l'un de l'autre, même lorsque la décélération subie par le siège et le passager correspond à une situation d'accident.

29. Siège d'appareil de transport aérien — notamment siège de passager d'avion de ligne —, caractérisé en ce qu'il comporte un piètement formé d'une structure (1) selon l'une quelconque des revendications 1 à 28.

30. Siège selon la revendication 29, caractérisé en ce que l'articulation avant (9) associe la structure (1) à la poutre transversale (32) avant du siège, et en ce que l'articulation arrière (10) associe la structure (1) à la poutre tranversale arrière (33) du siège.

**Patentansprüche**

1. Struktur, die das Gestell für einen Sitz einer Lufttransportmaschine bildet — insbesondere für den Fluggast-Sitz eines Verkehrsflugzeugs — die durch Verankerung mit der festen Struktur (3) des Flugzeugs — insbesondere am Boden (3) — durch mindestens eine vordere Verankerung (4) des Vorderfusses (5) und mindestens eine hintere Verankerung (7) des Hinterfusses (8) Vorder — und Hinterfuss (5, 8) mit dem Sitzgerüst (2) verbindet, wobei sich der Vorderfuss (5) in Normalposition im wesentlichen senkrecht von seiner unteren vorderen Verankerung (4) aus — insbesondere senkrecht zum Flugzeugboden (3) — erstreckt, und Vorder und Hinterfuss (5, 7) durch ihre jeweiligen, oberen Enden (9, 10) mit dem Sitzgerüst (2) gelenkig dergestalt verbunden sind, dass sie sich um die querliegenden, horizontalen Schwenkbolzen (11, 12) drehen können ; eine mit der unteren Verankerung (4) verbundene Energieaufnahmevorrichtung (13) ist dadurch gekennzeichnet, dass sie mit dem oberen Teil des Hinterfusses (8) verbunden ist, aber einen Abstand von dem hinteren oberen Gelenk (10) hat, und dass sie Mittel (23) besitzt, die das Schwenken des Hinterfusses (8) nach vorn um seine hintere Verankerung (7) mit der festen Struktur (3) des Flugzeugs begrenzen oder verhindern.

2. Struktur nach Anspruch 1, dadurch gekennzeichnet, dass der hintere Fuss (8) die Form einer Konsole hat, deren Ausbauchung nach vorn gerichtet ist, so dass der hintere Fuss (8), wenn sich die Struktur (1) verformt, eine Biegeverformung nach vorn erleidet, deren theoretische oder auferlegte Biegedrehachse (37) von der hinteren Verankerung (7) einen Abstand hat, und im wesentlichen zur Vertikalen der ursprünglichen Normalposition des Schwenkbolzens (12) des hinteren Fusses (8) am Sitzgerüst verläuft.

3. Struktur nach Anspruch 2, dadurch gekennzeichnet, dass der hintere Fuss (8) dergestalt ausgebildet ist, dass die theoretische oder auferlegte Biegedrehachse (37) von der festen Struktur (3) des Flugzeugs einen Abstand nach oben hat.

4. Struktur nach irgendeinem der Ansprüche 1 bis 3, dadurch gekennzeichnet, dass die vordere Verankerung (4) mit einem Gelenk versehen ist, das es dem vorderen Fuss (5) ermöglicht, sich aus seiner Normalposition heraus nach vorn um einen querliegenden horizontalen Schwenkbolzen (6) dieser vorderen Verankerung (4) zu drehen.

5. Struktur nach irgendeinem der Ansprüche 2 bis 4, dadurch gekennzeichnet, dass die Energieaufnahmevorrichtung (13) mit dem oberen Teil (35) des hinteren Fusses über der Zone (25) der maximalen Krümmung des hinteren Fusses (8) verbunden ist.

6. Struktur nach irgendeinem der Ansprüche 2 bis 5, dadurch gekennzeichnet, dass die Energieaufnahmevorrichtung (13) mit der in Normalposition vordersten Zone (24) des hinteren Fusses (8) verbunden ist.

7. Struktur nach irgendeinem der Ansprüche 2 bis 6, dadurch gekennzeichnet, dass die Energieaufnahmevorrichtung (13) mit dem hinteren Fuss (8) gelenkig so verbunden ist, dass sie sich um einen querliegenden, horizontalen Schwenkbolzen (26) drehen kann.

8. Struktur nach irgendeinem der Ansprüche 2 bis 7, dadurch gekennzeichnet, dass die Energieaufnahmevorrichtung (13) mit der benachbarten Zone der vorderen Verankerung (4) starr verbunden ist, so dass sie sich nicht um einen querliegenden horizontalen Bolzen drehen kann.

9. Struktur nach irgendeinem der Ansprüche 1 bis 8, dadurch gekennzeichnet, dass die beiden Verbindungszonen (18, 24) der Energieaufnahmerorrichtung (13) mit der Struktur (1) eine Richtung beschreiben, die so orientiert ist, dass die auf diese Richtung ausgeübten Kräfte, die bei in horizontaler Stellung befindlichem Sitz aus einer Längsverzögerung von 16 g resultieren, und die, die bei einem nach unten und nach vorn in einem Winkel von 30° geneigten Sitz aus einer Senkrechtverzögerung von 14 g resultieren, im wesentlichen die gleichen sind, insbesondere bei einer Richtung, die mit der Horizontalen einen Winkel a von etwa 37° bildet.

10. Struktur nach irgendeinem der Ansprüche 1 bis 9, dadurch gekennzeichnet, dass ihre Form — inbesondere die des hinteren Fusses (8) — und die Verbindungszonen (18, 24) der Energieaufnahmevorrichtung (13) so beschaffen sind, dass die Ausrichtung der Energieaufnahmevorrichtung (13) im Verhältnis zur festen Struktur (3) bei Verformung der Struktur (1) im wesentlichen die gleiche bleibt.

11. Struktur nach irgendeinem der Ansprüche 1 bis 10, dadurch gekennzeichnet, dass die Energieaufnahmevorrichtung (13) aus zwei Organen (15, 16) gebildet wird, die sich im Verhältnis zueinander längs einer Achse (17) verschieben können, wobei die Verschiebung von einer mechanischen Dissipation der Energie (plastische Deformation, Reibung usw.), sowie, während der Absorption der Verzögerungen von einer Verringerung der Gesamtlänge der Energieaufnahmevorrichtung (13) begleitet wird, und dadurch gekennzeichnet, dass die Schiebeachse (17), längs welcher sich die beiden Organe (15, 16) im Verhältnis zueinander verschieben, mit der Horizontalen des Flugzeugs einen Winkel (a) von gleich 30° oder darüber bildet, zumindest, wenn sich die Struktur (1) in der nicht verformten Normalposition befindet.

12. Struktur nach Anspruch 11, dadurch gekennzeichnet, dass der Winkel (a) weniger als oder gleich 60° beträgt, insbesondere jedoch etwa 37°.

13. Struktur nach irgendeinem der Ansprüche 1 bis 12, dadurch gekennzeichnet, dass sie eine einzige Energieaufnahmevorrichtung (13) für je ein Füssepaar, das aus einem vorderen Fuss (5) und einem hinteren Fuss (8) gebildet wird, besitzt.

14. Struktur nach irgendeinem der Ansprüche 1 bis 13, dadurch gekennzeichnet, dass eine Energieaufnahmevorrichtung (13) aus einer starren Stange (15) besteht, deren eines Ende (20) mit der übrigen Struktur (1) — insbesondere mit dem vorderen unteren Schwenkbolzen (6) oder mit dem hinteren Fuss — verbunden ist, und deren anderes Ende zugespitzt ist und in einen Block (16) aus Kunststoff oder ähnlichem Werkstoff mündet, so dass dieses zugespitzte Ende (21) der Stange (15) in den Block (16) eindringen kann, indem es den Werkstoff, aus dem er besteht, zerschneidet, wenn ein Druck von einem bestimmten Wert von der Stange (15) auf den Block (16) ausgeübt wird.

15. Struktur nach irgendeinem der Ansprüche 1 bis 14, dadurch gekennzeichnet, dass die hintere Verankerung (7), die den hinteren Fuss (8) mit der festen Struktur (3) verbindet, einen querliegenden horizontalen Schwenkbolzen besitzt, und dass die Mittel (23), die das Schwenken des hinteren Fusses (8) nach vorn begrenzen oder verhindern, aus einem Anschlag bestehen, der aus einer Rampe (23) des unteren Endes (31) des hinteren Fusses (8) gebildet wird, und gegen ein festes mit der festen Struktur (3) verbundenes Organ (19), insbesondere demunteren Längsträger (19) stösst.

16. Struktur nach irgendeinem der Ansprüche 1 bis 15, dadurch gekennzeichnet, dass die Energieaufnahmevorrichtung (13) so dimensioniert ist, dass sie bei einer Kraft, die nach ihrer Achse (17) ausgerichtet ist und Werte zwischen einem gegebenen Mindestwert $F_0$ (kein Nullwert) und einem gegebenen Höchstwert $F_1$ aufweist, wirksam wird, ohne an den Anschlag zu gelangen.

17. Struktur nach Anspruch 16, dadurch gekennzeichnet, dass $F_0$ einer Längsverzögerung von 9 g und $F_1$ einer Längsverzögerung von 20 g entspricht.

18. Struktur nach irgendeinem der Ansprüche 1 bis 17, dadurch gekennzeichnet, dass der hintere Fuss (8) starr ist und so dimensioniert — insbesondere in bezug auf die Dicke — dass er unter normalen Einsatzbedingungen quasi unbeweglich und unverformbar bleibt, sich aber — insbesondere durch Biegung im Sinne einer Verringerung seiner Krümmung — plastisch verformt, wenn die rom Sitz und seinem benutzer (seinen benutzern) erlittene Verzögerung einen bestimmten Wert überschreitet, der einer Unfallsituation entspricht, und die Deformation der Struktur (1) so auslöst, dass sie erst durch die Energiedissipation der elastischen und danach plastischen Verformung des hinteren Fusses (8) stattfindet.

19. Struktur nach Anspruch 18, dadurch gekennzeichnet, dass der hintere Fuss (8) so dimensioniert ist, dass er sich plastisch zu verformen beginnt — insbesondere durch Biegung im Sinner einer Verringerung seiner Krümmung — wenn die vom Sitz und seinem Benutzer erlittene Verzögerung einen Wert erreicht, der eine Energiedissipation in der Energieaufnahmevorrichtung (13) nach sich zieht, und dass der vordere Fuss (5) und das Sitzgerüst (2) — inbesondere die Längsträger und/oder Querträger (32, 33), mit welchen die Struktur (1) verbunden ist, so dimensioniert sind, dass sie starr bleiben und sich nur elastisch in dem Bereich der Verzögerungen verformen, die in der Struktur (1) keinen mechanischen Bruch verursachen.

20. Struktur nach einem der Ansprüche 17 bis 19, dadurch gekennzeichnet, dass der hintere Fuss (8) so dimensioniert ist, dass er sich ab einer Längsrerzögerung in der Grössenordnung von 15 g, insbesondere 14 g oder 16 g, verformt.

21. Struktur nach irgendeinem der Ansprüche 1 bis 20, dadurch gekennzeichnet, dass der hintere Fuss (8) aus einem festen unteren Teil (36), das mit der festen Struktur (3) des Flugzeugs verbunden ist, und einem oberen Schenkel (35) besteht, welcher um einen querliegenden horizontalen Schwenkbolzen (37) gelenkig mit dem Sitzgerüst (2) und diesem unteren Teil verbunden ist.

22. Struktur nach Anspruch 21, dadurch gekennzeichnet, dass das untere feste Teil (36) aus einem geraden Schenkel (36) besteht, der sich von der hinteren Verankerung (7), auf welcher er montiert ist, nach oben und nach vorn erstreckt, und an seinem oberen freien Ende (46) den Schwenkbolzen (37) des oberen Schenkels (35) trägt.

23. Struktur nach irgendeinem der Ansprüche 21 und 22, dadurch gekennzeichnet, dass der Schwenkbolzen des oberen Schenkels (35) zum oberen Teil der hinteren Verankerung (7) hin versetzt und im Verhältnis zur festen Struktur (3) überhöht ist, insbesondere um eine Höhe von etwa 105 mm.

24. Struktur nach irgendeinem der Ansprüche 21 bis 23, dadurch gekennzeichnet, dass der Schwenkbolzen (37) des oberen Schenkels (35) zum Vorderteil der hinteren Verankerung (7) hin um einen solchen Abstand d versetzt ist, dass er sich in Normalposition des oberen Schenkels an der Vertikalen oder nach vorn zur Vertikalen des Gelenks (10) des oberen Schenkels (35) am Sitgerüst (2) befindet.

25. Struktur nach irgendeinem der Ansprüche 22 bis 24, dadurch gekennzeichnet, dass der obere Schenkel (35) die Form einer konvexen Konsole hat und ausgehend von dem Schwenkbolzen (37), auf welchem das untere Ende (45) des oberen Schenkels (35) montiert ist, den unteren Schenkel (36) kontinuierlich verlängert.

26. Struktur nach irgendeinem der Ansprüche 21 bis 25, dadurch gekennzeichnet, dass sich zwischen dem oberen Schenkel (35) und dem festen unteren Teil (36) eine Energieaufnahmevorrichtung befindet, um die beim Schwenken dieses oberen Schenkels (35) nach vorn um seinen Schwenkbolzen im Verhältnis zum festen unteren Teil (36) entstehende Energie aufzunehmen.

27. Struktur nach irgendeinem der Ansprüche 21 bis 26, dadurch gekennzeichnet, dass sie Mittel (38) besitzt, die einen Anschlag bilden, welcher jedes Schwenken nach hinten des oberen Schenkels (35) des hinteren Fusses (8) von seiner Normalposition aus unmöglich macht.

28. Struktur nach irgendeinem der Ansprüche 1 bis 27, dadurch gekennzeichnet, dass sie ausserdem einen aus einem Stück bestehenden Längsträger (19) besitzt, der direkt mit der vorderen Verankerung (8) des vorderen Fusses (5) und mit der hinteren Verankerung (7) des hinteren Fusses (8) verbunden ist, um diese beiden Verankerungen (4, 7) im gleichbleibenden Abstand voneinander zu halten, selbst in dem Fall, in dem die vom Sitz und seinem Benutzer erlittene Verzögerung einer Unfallsituation entspricht.

29. Sitz für eine Lufttransportmaschine — insbesondere Fluggastsitz eines Verkehrsflugzeugs — dadurch gekennzeichnet, dass er ein Fussgestell besitzt, welches aus einer Struktur (1) nach irgendeinem der Ansprüche 1 bis 28 gebildet wird.

30. Sitz nach Anspruch 29, dadurch gekennzeichnet, dass das vordere Gelenk (9) die Struktur (1) mit dem vorderen Querträger (32) des Sitzes verbindet, und dass das hintere Gelenk (10) die Struktur (1) mit dem hinteren Gelenk (33) des Sitzes verbindet.

**Claims**

1. Structure forming a base for a coupled aircraft seat, particularly for a passenger seat of a passenger aircraft, anchored to the fixed structure (3) of the aircraft, in particular to the floor (3), by at least one front anchoring (4) of a front foot (5) and by at least one rear anchoring (7) of a rear foot (8), the front (5) and rear (7) feet being coupled to the framework (2) of the seat, the front foot (5) extending, in its normal position, at least substantially vertically from its lower front anchoring (4), in particular perpendicular to the floor (3) of the aircraft, the front (5) and rear (7) feet being articulated by their respective upper ends (9, 10) to the framework (2) of the seat in such a way as to be able to pivot about horizontal and transverse pivoting axes (11, 12), an energy absorbing device (13) being coupled to the lower front anchoring (4), characterised in that the energy absorbing device (13) is coupled to the upper section (35) of the rear foot (8) but at a distance from the upper rear articulation (10) and in that it comprises means (23) limiting or preventing the forward pivoting of the rear foot (8) about its rear anchoring (7) to the fixed structure (3) of the aircraft.

2. Structure according to Claim 1, characterised in that the rear foot (8) is in the shape of a bracket whose convexity is oriented forwards such that the rear foot (8) undergoes, when the structure (1) distort, a distortion in flexion in the forward direction whose theoretical or imposed axis of rotation in flexion (37) is distant from the rear anchoring (7) and substantially vertical to the normal initial position of the axis (12) of articulation of the rear foot (8) on the framework (2) of the seat.

3. Structure according to Claim 2, characterised in that the rear foot (8) is constituted in such a way that the theoretical or imposed axis of rotation in flexion (37) is separated in the upward direction from the fixed structure (3) of the aircraft.

4. Structure according to any one of Claims 1 to 3, characterised in that the front anchoring (4) comprises an articulation allowing the front foot (5) to pivot forwards from its normal position about a horizontal transverse pivoting axis (6) of this front anchoring (4).

5. Structure according to any one of Claims 2 to 4, characterised in that the energy absorbing device (13) is coupled to the upper section (35) of the rear foot (8) above the zone (25) of maximum curvature of the rear foot (8).

6. Structure according to any one of Claims 2 to 5, characterised in that the energy absorbing device (13) is coupled to the zone (24) of the rear foot (8) which is the furthest forward in the normal position.

7. Structure according to any one of Claims 1 to 6, characterised in that the energy absorbing device (13) is coupled in an articulated manner to the rear foot (8) in such a way as to be able to pivot about a horizontal transverse pivoting axis (26).

8. Structure according to any one of Claims 1 to 7, characterised in that the energy absorbing device (13) is rigidly coupled in the vicinity of or to the front anchoring (4), without any possibility of pivoting about a horizontal transverse axis.

9. Structure according to any one of Claims 1 to 8, characterised in that the two areas of coupling (18, 24) of the energy absorbing device (13) to the structure (1) define a direction oriented in such a way that the forces applied in this direction, resulting from a longitudinal deceleration of 16 g with the seat being horizontal and from a vertical deceleration of 14 g with the seat being inclined downwards and forwards by 30°, are substantially the same, in particular a direction forming an angle $\alpha$ with the horizontal of the order of 37°.

10. Structure according to any one of Claims 1 to 9, characterised in that its general shape, in particular that of the rear foot (8), and the areas of coupling (18, 24) of the energy absorbing device (13) are such that the orientation of the energy absorbing device (13) with respect to the fixed structure (3) remains substantially the same when there is a distortion of the structure (1).

11. Structure according to any one of Claims 1 to 10, characterised in that the energy absorbing device (13) is constituted by two units (15, 16) capable of sliding with respect to each other along an axis (17), the sliding movement being accompanied by dissipation of mechanical energy (plastic deformation, friction etc.) and, during absorption of decelerations, by a reduction in the total length of the energy absorbing device (13), and in that the sliding axis (17) of the two units (15, 16) with respect to each other forms with the horizontal of the aircraft, at least when the structure (1) is in its normal non-distorted position, an angle ($\alpha$) greater than or equal to 30°.

12. Structure according to Claim 11, characterised in that the angle ($\alpha$) is less than or equal to 60°, particularly of the order of 37°.

13. Structure according to any one of Claims 1 to 12, characterised in that it comprises one and only one energy absorbing device (13) per pair of feet formed by a front foot (5) and a rear foot (8).

14. Structure according to any one of Claims 1 to 13, characterised in that an energy absorbing device (13) is constituted by a rigid rod (15) of which one end (20) is coupled to the rest of the structure (1), particularly to the lower front pivoting axis (6) or to the rear foot (8), and whose other end is steeled and engaged in a block (16) of synthetic plastic material or equivalent, such that this steeled end (21) of the rod (15) can penetrate into the block (16) by cutting into the material which constitutes it, above a certain value of the pressure force of the rod (15) on the block (16).

15. Structure according to any one of Claims 1 to 14, characterised in that the rear anchoring (7) coupling the rear foot (8) to the fixed structure (3) comprises a horizontal transverse pivoting axis (22) and in that the means (23) limiting or preventing the forward pivoting of the rear foot (8) are constituted by a stop formed by a ramp (23) of the lower end (31) of the rear foot (8) bearing against a fixed unit (19) integral with the fixed structure (3), particularly the lower longitudinal member (19).

16. Structure according to any one of Claims 1 to 15, characterised in that the energy absorbing device (13) is dimensioned in order to be active without coming against its stop for values of force oriented along its axis (17) included between a given minimum and non-zero value $F_0$ and a given maximum value $F_1$.

17. Structure according to Claim 16, characterised in that $F_0$ corresponds to a longitudinal deceleration of 9 g, and in that $F_1$ corresponds to a longitudinal deceleration of 20 g.

18. Structure according to any one of Claims 1 to 17, characterised in that the rear foot (8) is rigid and dimensioned, particularly in thickness, in such a way that it remains virtually immobile and unable to be distorted under normal conditions of use but which undergoes plastic deformation, particularly in flexion in the direction of a reduction in its curvature, when the deceleration undergone by the seat and its passenger or passengers exceeds a predetermined value corresponding to an accident situation and stresses the structure (1) such that it deforms, so that this deformation of the structure (1) takes place only with dissipation of elastic deformation energy and then of plastic deformation energy of the rear foot (8).

19. Structure according to Claim 18, characterised in that the rear foot (8) is dimensioned in such a way as to begin its plastic deformation, particularly in flexion in the direction of a reduction of curvature, after a deceleration undergone by the seat and its passenger which gives rise to a dissipation of energy in the energy absorbing device (13), and in that the front foot (5) and the framework (2), particularly the longitudinal members and/or the transverse beams (32, 33) to which the structure (1) is coupled, are dimensioned in order to remain rigid or to remain only elastically deformable in the range of decelerations which do not result in a mechanical fracture of the structure (1).

20. Structure according to Claims 17 to 19, characterised in that the rear foot (8) is dimensioned in order to deform after a deceleration corresponding to a longitudinal deceleration of the order of 15 g, particularly 14 g or 16 g.

21. Structure according to any one of Claims 1 to 20, characterised in that the rear foot (8) is constituted by a fixed lower section (36) integral with the fixed structure (3) of the aircraft and by an upper arm (35) articulated to the framework (2) and to this lower section (36) about a horizontal transverse pivoting axis (37).

22. Structure according to Claim 21, characterised in that the fixed lower section (36) is constituted by a lower arm (36) which is rectilinear and extends upwards and forwards from the rear anchoring (7) on which it is mounted and supports at its upper free end (46) the pivoting axis (37) of the upper arm (35).

23. Structure according to either of Claims 21 and 22, characterised in that the pivoting axis (37) of the upper arm (35) is distanced in the upward direction from the rear anchoring (7) and raised with respect to the fixed structure (3), particularly by a height h of the order of 105 mn.

24. Structure according to any one of Claims 21 to 23, characterised in that the pivoting axis (37) of the upper arm (35) is distanced in the forward direction from the rear anchoring (7), particularly by a distance d such that it is, in the normal position of the upper arm (35), vertical to or in front of the vertical line through the articulation (10) of the upper arm (35) on the framework (2).

25. Structure according to any one of Claims 22 to 24, characterised in that the upper arm (35) is in the shape of a bracket with convexity oriented forwards and continuously prolongs the lower arm (36) from the pivoting axis (37) on which the lower end (45) of the upper arm (35) is mounted.

26. Structure according to any one of Claims 21 to 25, characterised in that it comprises an energy absorbing device interposed between the upper arm (35) and the fixed lower section (36) to absorb energy during the forward pivoting of this upper arm (35) about its pivoting axis (37) with respect to the lower fixed section (36).

27. Structure according to any one of Claims 21 to 26, characterised in that it comprises means (38) forming a stop preventing any rearward pivoting of the upper arm (35) of the rear foot (8) from its normal position.

28. Structure according to any one of Claims 1 to 27, characterised in that it furthermore comprises a mono-block lower longitudinal member (19) directly coupled to the front anchoring (4) of the front foot (5) and to the rear anchoring (7) of the rear foot (8) in order to maintain the two anchorings (4, 7) at a constant distance from each other, even when the deceleration undergone by the seat and the passenger corresponds to an accident situation.

29. Aircraft seat, particularly a passenger seat of a passenger aircraft, characterised in that it comprises a base formed from a structure (1) according to any one of Claims 1 to 28.

30. Seat according to Claim 29, characterised in that the front articulation (9) couples the structure (1) to the front transverse beam (32) of the seat, and in that the rear articulation (10) couples the structure (1) to the rear transverse beam (33) of the seat.

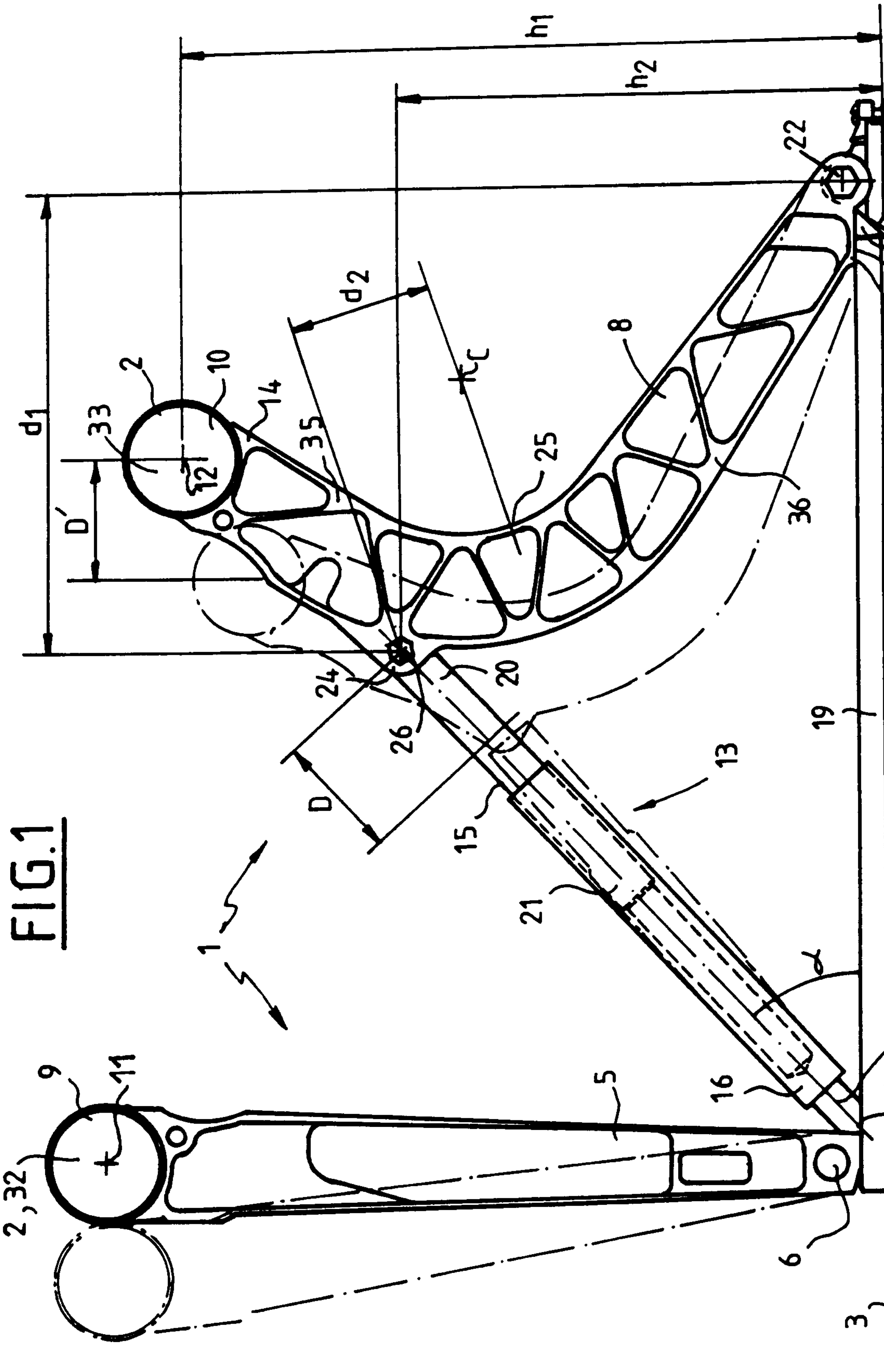

FIG.1

FIG. 2

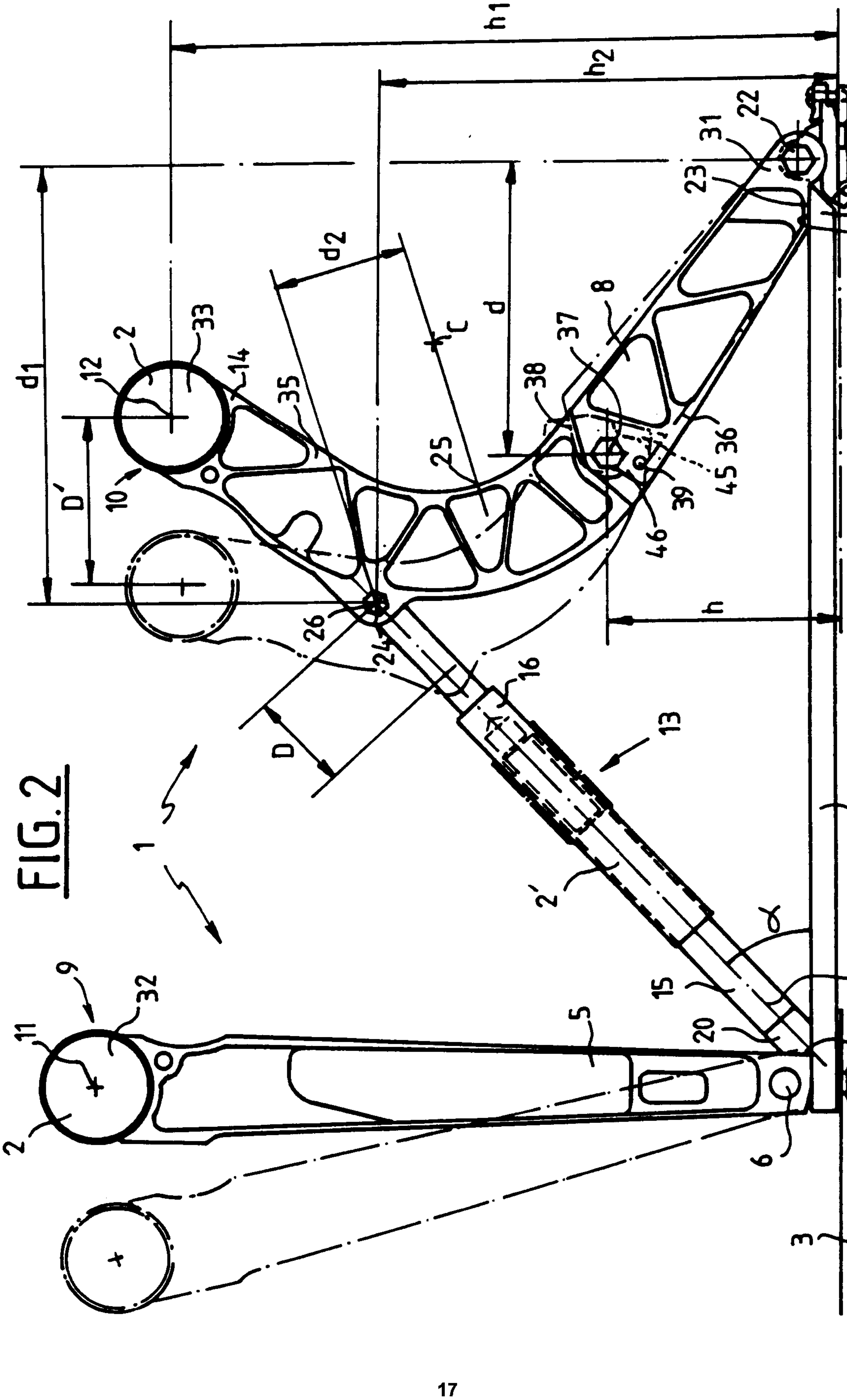

FIG. 3